# EUROPEAN PATENT SPECIFICATION

(11) **EP 4 206 066 B1**
(45) Date of publication and mention of the grant of the patent: **12.02.2025**
(21) Application number: 21306948.7
(22) Date of filing: 28.12.2021
(51) Int. Cl.: B63B 21/50, F03D 13/25, B63B 1/10, B63B 77/10, B63B 35/44

(54) **OFFSHORE ELECTRICITY PRODUCTION ASSEMBLY COMPRISING A FLOATING PLATFORM, A WIND TURBINE, AND INCLINED MOORING TENDONS**
OFFSHORE-STROMERZEUGUNGSANORDNUNG MIT EINER SCHWIMMENDEN PLATTFORM, EINER WINDTURBINE UND GENEIGTEN VERANKERUNGSKABELN
ENSEMBLE DE PRODUCTION D'ÉLECTRICITÉ EN MER COMPRENANT UNE PLATEFORME FLOTTANTE, UNE ÉOLIENNE ET DES ARMATURES D'AMARRAGE INCLINÉES

(43) Date of publication of application: 05.07.2023
(73) Proprietor: TotalEnergies OneTech, 92400 Courbevoie (FR)
(72) Inventor: Le-Guennec, Stéphane, 78380 BOUGIVAL (FR); Raboin, Jean-Christophe, 41600 CHAUMONT SUR THARONNE (FR)
(74) Representative: Lavoix

(56) References cited:
- WO-A1-2012/051382
- WO-A1-2021/240449
- WO-A2-2004/061302
- CN-A- 108 284 923
- CN-A- 112 648 149

## Description

The present invention deals with an offshore electricity production assembly comprising a floating platform, a wind turbine fixed to the floating platform, and mooring tendons connecting the floating platform to a seabed.

It also deals with a process of installing such an assembly in a predefined location.

Such a floating platform is known as a Tensioned-Leg Platform or TLP. When installed, it is permanently moored by tendons, usually connected to corners of the platform structure. TLPs are used for offshore production of oil and gas, and as bases for offshore wind turbines.

Typically, the floating platform may be designed so that the assembly (platform plus wind turbine) can freely float in a stable enough manner for being towed to the predefined location of operations. The design constraint of the hull to be stable during the wet tow operation with the wind turbine integrated onto the hull results in the hull steel weight being increased and, thus, in the overall cost of the floating structure being increased.

Another solution is to include temporary disjoint floating tanks connected by a rigid structure. With this type of floating platform, the assembly (platform plus the wind turbine) can freely float in a stable enough manner for being towed to the predefined location of operations. With this configuration, the cost of the floating platform can be reduced, but the additional cost of the temporary floating tanks together with their installation and removal offshore increases the overall cost and project risks.

Motions of the installed assembly is also a major issue for smooth operation of the wind turbine and for reducing mechanical stress in the assembly. Using inclined mooring tendons (not parallel to each other) has proven to be a good solution to reduce the horizontal motions of the assembly, in particular at the elevation of the rotor-nacelle assembly of the wind turbine. However, using inclined tendons reduces the capacity to withstand the vertical loads driven by waves, particularly in extreme conditions. As a consequence, the capacity of the mooring has to be increased. WO 2021/240449 A1 refers to a floating structure provided with a hollow body prearranged to support a wind generator and suitable to be installed in deep water by a plurality of arms which can be stably connected to the ground by anchoring members for each arm and a connection member arranged between each anchoring member and a respective arm, distance adjustment means being provided in order to vary the inclination of the hollow body with respect to the ground.

Therefore, the above design constraints result in a high cost of the assembly.

An aim of the invention is thus to provide an offshore electricity production assembly that is less expensive to produce.

To this end, the invention proposes an offshore electricity production assembly according to claim 1.

In other embodiments, the assembly comprises one or several of the features corresponding to claims 2 to 11, taken in isolation or any claimed combination.

The invention also deals with a process according to claim 12.

The invention and its advantages will be better understood upon reading the following description, given solely by way of example and with reference to the appended drawings, in which:
- Figure 1 is a schematic side view of an assembly according to the invention in operation,
- Figure 2 is a schematic upper view of the floating platform of the assembly shown in Figure 1, and
- Figure 3 is a graphic showing vertical loads applied by swell on the column and on the pontoons of the platform shown in Figures 1 and 2, as a function of the swell period.

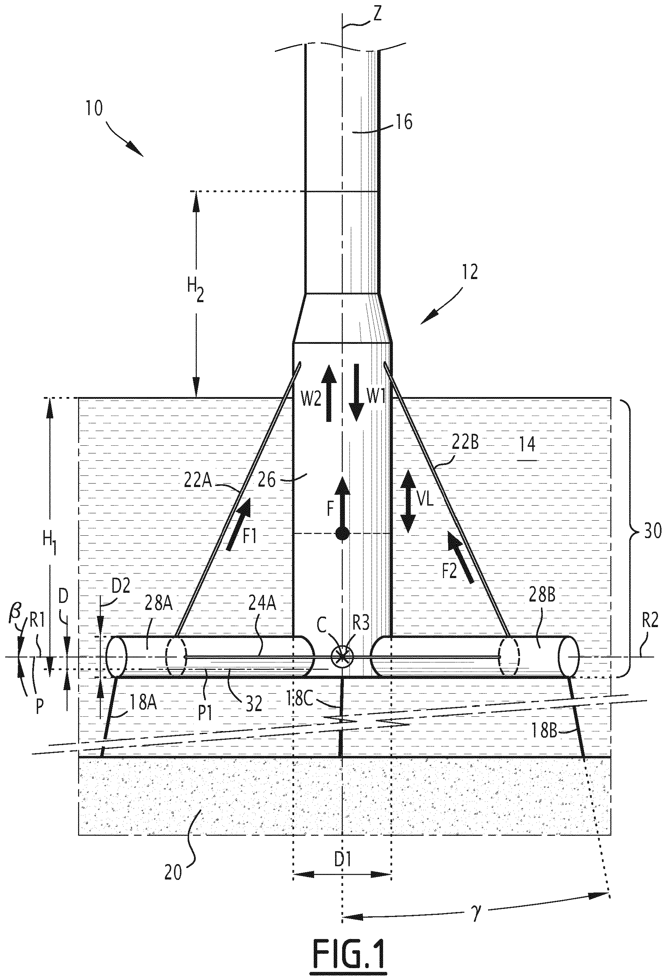

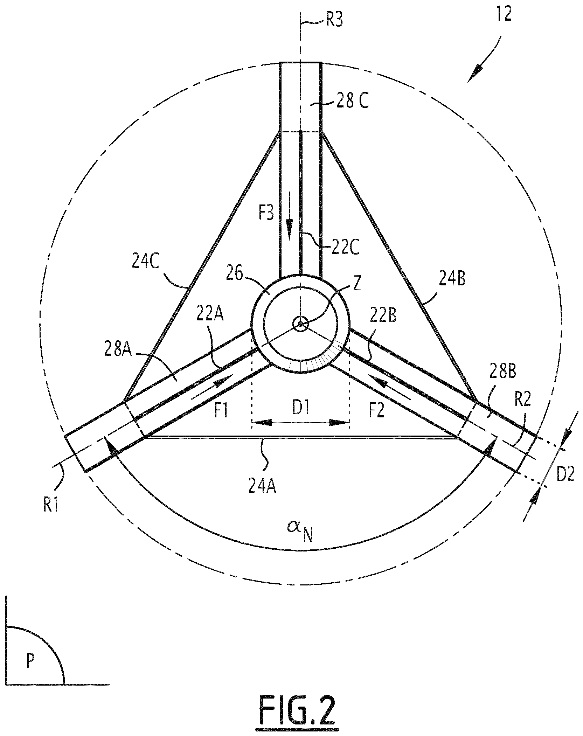

An offshore electricity production assembly 10 according to the invention will be described with reference to Figures 1 and 2.

The assembly 10 comprises a floating platform 12 floating on a body of water 14, a wind turbine 16 (partially represented in Figure 1) fixed to the floating platform, and inclined mooring tendons 18A, 18B, 18C connecting the floating platform to a seabed 20.

The assembly 10 comprises a first plurality of connecting tendons 22A, 22B, 22C. Furthermore, the assembly 10 comprises a second plurality of connecting tendons 24A, 24B, 24C.

The floating platform 12 comprises a tubular central buoyant column 26 extending along a longitudinal axis Z intended to be vertical, and a plurality of tubular radial buoyant pontoons 28A, 28B, 28C protruding from the column along radial axes R1, R2, R3 spaced around the longitudinal axis Z.

The floating platform 12 is subject to a buoyancy force F, the column 26 and the pontoons 28A, 28B, 28C being configured to provide at least 90% of said buoyancy force, preferably more than 95% of the buoyancy force F. In other words, buoyancy is achieved by the column 26 and the pontoons 28A, 28B, 28C without any other significant element(s).

The column 26 has an immersed portion 30 defining a first average external diameter D1. Each of the pontoons 28A, 28B, 28C defines a second average external diameter D2, the pontoons being fully immersed in the body of water 14 when the mooring tendons 18A, 18B, 18C are tensioned.

By "average external diameter" of a tubular element, it is meant the external diameter of a cylindrical tube having the same volume.

The first average external diameter D1 is larger than the second average external diameter D2, wherein the ratio D1/D2 is comprised between 1.4 and 2.3.

For example, the immersed portion 30 of the column 26 and the pontoons 28A, 28B, 28C have constant cross-section diameters along the longitudinal axis Z and the radial axes R1, R2, R3 respectively. As a consequence, their average external diameters D1, D2 are equal to their external diameters.

Advantageously, the column 26 defines only one or two internal compartment(s) (not shown).

The column 26 and the wind turbine 16 have a weight W1, and the column, considered alone, is subject to a buoyancy force W2, said buoyancy force W2 being for example comprised between 85% and 115% of said weight W1.

Advantageously, the plurality of pontoons 28A, 28B, 28C consists of three to five pontoons, preferably three pontoons.

For example, each of the pontoons 28A, 28B, 28C defines only one internal compartment (not shown).

Advantageously, the radial axes R1, R2, R3 are regularly spaced around the longitudinal axis Z. Seen from above (Figure 2), the radial axes R1, R2, R3 define angles α_{N} of 360°/N between themselves, N being their number. In the example shown, the angle α_{N} is approximately 120°.

The radial axes R1, R2, R3 also defines an angle β with a transverse plan P perpendicular to the longitudinal axis Z, the angle being comprised between -10° and +10°. For example, the angle β is about 0°, which means that the radial axes R1, R2, R3 are perpendicular to the longitudinal axis Z.

The transverse plan P for example contains the volumetric center C of the plurality of pontoons 28A, 28B, 28C.

The floating platform 12, considered without the wind turbine 16 and the mooring tendons 18A, 18B, 18C, is advantageously configured to float on the body of water 14 during wet tow to the predefined location of operations on the body of water 14 with a water line 32 defining a plan P1 parallel to the transverse plan P.

The plan P1 is advantageously located below the transverse plan P, and for example defines a distance D between them, said distance being smaller than 25% of the second average external diameter D2. This ensures stability of the floating platform 12 without the wind turbine 16 on it during wet tow.

In the example, there are three mooring tendons 18A, 18B, 18C.

The mooring tendons 18A, 18B, 18C are tensioned when the assembly 10 is in operation (position shown in Figure 1).

The mooring tendons 18A, 18B, 18C are inclined with respect to the longitudinal axis Z (considered vertical for this matter), and converge upwards. For example, the mooring tendons 18A, 18B, 18C form angles with the longitudinal axis Z that are all comprised between 7° and 17° when the floating platform 12 is balanced without environmental loads (wind, waves, current). These angles may differ from each other and evolve with time, depending on the movements of the floating platform 12. In Figure 1, only the angle γ formed by the mooring tendon 18B is represented.

The connecting tendons 22A, 22B, 22C of the first plurality extend between the column 26 and one of the pontoons 28A, 28B, 28C respectively for applying upward forces F1, F2, F3 on the pontoons. The connecting tendons 22A, 22B, 22C are advantageously pre-tensioned after the assembly of the pontoon elements 28A, 28B, 28C to the column 26. Their function is mainly to reduce the maximum bending moment in the pontoons 28A, 28B, 28C once the floating platform 12 is connected to the mooring tendons 18A, 18B, 18C.

Any two successive pontoons 28A, 28B, 28C around the longitudinal axis Z are connected to each other by one of the connecting tendons 24A, 24B, 24C of the second plurality.

A process for installing the assembly 10 at a predefined location, according to the invention, will now be described.

First, the floating platform 12, the mooring tendons 18A, 18B, 18C, and the wind turbine 26 are provided separately (not assembled).

The floating platform 12 is then moved to the predefined location, the floating platform either floating on the body of water 14 and being towed by at least one ship (not shown), or being transported on board a floating vessel (also not shown). If the floating platform 12 floats on the body of water 14, it does it with a water line 42 corresponding to the plan P1, which provides stability during transportation of the floating platform.

Once the floating platform 12 is in the predefined location, the mooring tendons 18A, 18B, 18C are connected to the seabed 20 and to the floating platform, and tensioned.

The wind turbine 16 is installed onto the floating platform 12 using at least one lift or a crane vessel (not shown).

In operation, the mooring tendons 18A, 18B, 18C are tensioned and the floating platform 12 is subject to swell conditions.

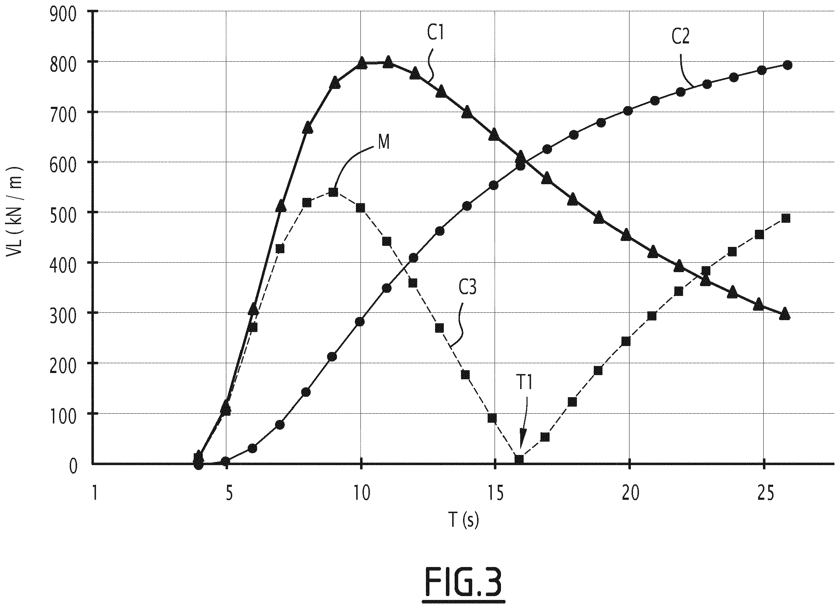

Swell creates a vertical load on the pontoons (curve C1 in Figure 3) and a vertical load on the column (curve C2) that has an opposite sign. Curve C3 represents the sum VL of these vertical loads.

The curves C1, C2, C3 are calculated using the below example. Vertical loads, in kN/m (kilonewton per meter of wave amplitude), are expressed as a function of the wave period T in seconds. The floating platform 12 is designed in such way that the vertical load VL (curve C3) is close to zero for a period T1 (so called cancellation period), corresponding to the typical swell peak period encountered in extreme conditions at the location of operations, thus reducing the extreme tension in the mooring tendons 18A, 18B, 18C. The cancellation period T1 can be shifted by adjusting the D1/D2 ratio.

### Example:

### Floating platform 12

| | |
|---|---|
| Operating draught H1 | 28m |
| Wind turbine blade air gap /MSL H2 | 22m |

### Central column 26

| | |
|---|---|
| Column diameter D1 | 11.0m |
| Cross section | 95.0m2 |
| Buoyancy | 2725ton |
| Weight | 950ton |

### Pontoons 28A, 28B, 28C

| | |
|---|---|
| Pontoon length | 40m |
| Pontoon diameter D2 | 6m |
| Cross section | 28.3m2 |
| Total buoyancy (x3) | 3474ton |
| Total weight (x3) | 1018ton |

### Wind turbine 16

| | |
|---|---|
| Total mass considered | 1800ton |

In the predefined location where the assembly 10 is, the extreme swell conditions (typically the swell having a 50-years return period) corresponds, for example, to a wave significant height of 12m and a peak period of 16s.

As it can be seen in curve C3, the total vertical load VL is close to zero (at least below 50 kN) for that particular swell peak period. Thanks to the diameter D1 being larger than the diameter D2 and adjusted to the right ratio, the vertical load applied by swell on the column 26 compensates the vertical load applied by swell on the pontoons 28A, 28B, 28C. Thus, the cancellation period T1 matches the peak period of the extreme swell conditions, which minimizes the extreme tensions in the mooring tendons 18A, 18B, 18C.

Removing the constraint of the floating platform to be stable in pre-service conditions (i.e. prior to the connection to the mooring tendons) with the wind turbine integrated onto the floating platform allows for further optimization of the design with regards to its volume distribution between the column and the pontoons leading to a reduction of the wave induced excitation force in the vertical axis (i.e. heave excitation force).

This results in a virtuous circle when designing the floating platform and the mooring tendons reducing the required floating platform volume (and thus its weight) and the extreme tension in the mooring tendons. Indeed, the pre-tension of the mooring tendons shall be high enough to prevent negative tension under extreme environmental conditions. The heave excitation force is one of the main contributors of the mooring tendon dynamic load. Reducing this heave excitation force by optimizing the floating platform design (i.e. its volume distribution) allows for a reduction of the pre-tension, as well as a reduction of the extreme tension in the mooring tendons. The pre-tension being ensured by the buoyancy of the floating platform, the reduced pre-tension allows for further reduction of the floating platform size which in turn reduces the heave excitation force.

This virtuous circle leads to an optimization of the floating platform and the mooring tendons design. The assembly is thus less expensive to produce.

## Claims

1. An offshore electricity production assembly (10) comprising a floating platform (12), a wind turbine (16) fixed to the floating platform (12), and inclined mooring tendons (18A, 18B, 18C) connecting the floating platform (12) to a seabed (20), the floating platform (12) comprising:
- a tubular central buoyant column (26) extending along a longitudinal axis (Z) intended to be vertical, the column (26) having an immersed portion (30) defining a first average external diameter (D1) which is the external diameter of a cylindrical tube having the same volume as the immersed portion (30) of the column (26), and
- a plurality of tubular radial buoyant pontoons (28A, 28B, 28C) protruding from the column (26) along radial axes (R1, R2, R3) spaced around the longitudinal axis (Z), each of the pontoons (28A, 28B, 28C) defining a second average external diameter (D2) which is the external diameter of a cylindrical tube having the same volume as the considered pontoon (28A, 28B, 28C), the pontoons (28A, 28B, 28C) being immersed in a body of water (14), wherein the first average external diameter (D1) is larger than the second average external diameter (D2),
wherein the floating platform (12) is subject to a buoyancy force (E), the column (26) and the pontoons (28A; 28B, 28C) being configured to provide at least 90% of said buoyancy force (F),
wherein each of the radial axes (R1, R2, R3) defines an angle (β) with a transverse plan (P) perpendicular to the longitudinal axis (Z), the angle (β) being comprised between - 10° and +10°, and
wherein the first average external diameter (D1) divided by the second average external diameter (D2) is comprised between 1.4 and 2.3.

2. The electricity production assembly (10) according to claim 1, wherein the immersed portion (30) of the column (26) and the pontoons (28A, 28B, 28C) have constant cross-section external diameters along the longitudinal axis (Z) and the radial axes (R1, R2, R3) respectively.

3. The electricity production assembly (10) according to claim 1 or 2, wherein the column (26) defines only one or two internal compartment(s).

4. The electricity production assembly (10) according to any one of claims 1 to 3, wherein each of the pontoons (28A, 28B, 28C) defines only one internal compartment.

5. The electricity production assembly (10) according to any one of claims 1 to 4, wherein the column (26) and the wind turbine have a weight (W1), and the column (26), considered alone, is subject to a buoyancy force (W2), said buoyancy force (W2) being comprised between 85% and 115% of said weight (W1).

6. The electricity production assembly (10) according to any one of claims 1 to 5, wherein the plurality of pontoons (28A, 28B, 28C) consists of three to five pontoons (28A, 28B, 28C).

7. The electricity production assembly (10) according to any one of claims 1 to 6, wherein the plurality of pontoons (28A, 28B, 28C) consists of three pontoons (28A, 28B, 28C).

8. The electricity production assembly (10) according to any one of claims 1 to 7, wherein the floating platform (12), considered without the wind turbine and the mooring tendons (18A, 18B, 18C), is configured to float on the body of water (14) with a water line (32) defining a plan (P1) parallel to the transverse plan (P), the plan (P1) being lower than the transverse plan (P), the transverse plan (P) including a volumetric center (C) of the plurality of pontoons (28A, 28B, 28C).

9. The electricity production assembly (10) according to any one of claims 1 to 8, further comprising a first plurality of connecting tendons (22A, 22B, 22C) extending between the column (26) and one of the pontoons (28A, 28B, 28C) respectively for applying upward forces (F1, F2, F3) on the pontoons (28A, 28B, 28C).

10. The electricity production assembly (10) according to any one of claims 1 to 9, further comprising a second plurality of connecting tendons (24A, 24B, 24C), any two successive pontoons of the plurality of pontoons (28A, 28B, 28C) around the longitudinal axis (Z) being connected to each other by one of said connecting tendons (24A, 24B, 24C) of the second plurality.

11. The electricity production assembly (10) according to any one of claims 1 to 10, wherein the radial axes (R1, R2, R3) are regularly spaced around the longitudinal axis (Z).

12. A process for installing an electricity production assembly (10) according to any one of claims 1 to 11 in a predefined location, comprising the following steps:
- providing the floating platform (12), the mooring tendons (18A, 18B, 18C), and the wind turbine separately,
- moving the floating platform (12) to the predefined location, the floating platform (12) either floating on the body of water (14) and being towed by at least one ship, or being transported on board a floating vessel,
- connecting the mooring tendons (18A, 18B, 18C) to the seabed (20) and to the floating platform (12), and tensioning the mooring tendons (18A, 18B, 18C), and
- fixing the wind turbine to the floating platform (12) using at least one lift from a crane vessel.

## Patentansprüche

1. Offshore-Stromerzeugungsanordnung (10), die eine schwimmende Plattform (12), eine an der schwimmenden Plattform (12) befestigte Windturbine (16) und geneigte Verankerungsspannglieder (18A, 18B, 18C) umfasst, die die schwimmende Plattform (12) mit einem Meeresboden (20) verbinden, wobei die schwimmende Plattform (12) Folgendes umfasst:
- eine rohrförmige zentrale Schwimmsäule (26), die sich entlang einer Längsachse (Z) erstreckt, die vertikal sein soll, wobei die Säule (26) einen eingetauchten Teil (30) aufweist, der einen ersten mittleren Außendurchmesser (D1) definiert, der der Außendurchmesser eines zylindrischen Rohrs ist, das das gleiche Volumen wie der eingetauchte Teil (30) der Säule (26) hat, und
- eine Vielzahl von röhrenförmigen, radial schwimmenden Pontons (28A, 28B, 28C), die von der Säule (26) entlang radialer Achsen (R1, R2, R3) vorstehen, die um die Längsachse (Z) herum beabstandet sind, wobei jeder der Pontons (28A, 28B, 28C) einen zweiten mittleren Außendurchmesser (D2) definiert, der der Außendurchmesser eines zylindrischen Rohrs mit dem gleichen Volumen wie der betrachtete Ponton (28A, 28B, 28C) ist, wobei die Pontons (28A, 28B, 28C) in einen Wasserkörper (14) eingetaucht sind, wobei der erste mittlere Außendurchmesser (D1) größer als der zweite mittlere Außendurchmesser (D2) ist,
wobei die schwimmende Plattform (12) einer Auftriebskraft (E) ausgesetzt ist, wobei die Säule (26) und die Pontons (28A; 28B, 28C) so konfiguriert sind, dass sie mindestens 90 % der Auftriebskraft (F) liefern,
wobei jede der radialen Achsen (R1, R2, R3) einen Winkel (β) mit einer Querebene (P) senkrecht zur Längsachse (Z) bildet, wobei der Winkel (β) zwischen -10° und +10° liegt, und
wobei der erste durchschnittliche Außendurchmesser (D1) geteilt durch den zweiten durchschnittlichen Außendurchmesser (D2) zwischen 1,4 und 2,3 liegt.

2. Stromerzeugungsanordnung (10) nach Anspruch 1, wobei der eingetauchte Teil (30) der Säule (26) und die Pontons (28A, 28B, 28C) entlang der Längsachse (Z) bzw. der radialen Achsen (R1, R2, R3) konstante Querschnittsaußendurchmesser aufweisen.

3. Stromerzeugungsanordnung (10) nach Anspruch 1 oder 2, wobei die Säule (26) nur ein oder zwei Innenabteil(e) definiert.

4. Stromerzeugungsanordnung (10) nach einem der Ansprüche 1 bis 3, wobei jeder der Pontons (28A, 28B, 28C) nur ein Innenabteil definiert.

5. Stromerzeugungsanordnung (10) nach einem der Ansprüche 1 bis 4, wobei die Säule (26) und die Windturbine ein Gewicht (W1) haben und die Säule (26) allein betrachtet einer Auftriebskraft (W2) unterliegt, wobei die Auftriebskraft (W2) zwischen 85 % und 115 % des Gewichts (W1) beträgt.

6. Stromerzeugungsanordnung (10) nach einem der Ansprüche 1 bis 5, wobei die Mehrzahl der Pontons (28A, 28B, 28C) aus drei bis fünf Pontons (28A, 28B, 28C) besteht.

7. Stromerzeugungsanordnung (10) nach einem der Ansprüche 1 bis 6, wobei die Mehrzahl der Pontons (28A, 28B, 28C) aus drei Pontons (28A, 28B, 28C) besteht.

8. Stromerzeugungsanordnung (10) nach einem der Ansprüche 1 bis 7, wobei die schwimmende Plattform (12), betrachtet ohne die Windturbine und die Verankerungsspannglieder (18A, 18B, 18C), so konfiguriert ist, dass sie auf dem Wasserkörper (14) mit einer Wasserlinie (32) schwimmt, die eine Ebene (P1) parallel zu der Querebene (P) definiert, wobei die Ebene (P1) niedriger als die Querebene (P) ist, wobei die Querebene (P) ein volumetrisches Zentrum (C) der Mehrzahl von Pontons (28A, 28B, 28C) umfasst.

9. Stromerzeugungsanordnung (10) nach einem der Ansprüche 1 bis 8, ferner mit einer ersten Mehrzahl von Verbindungsspanngliedern (22A, 22B, 22C), die sich jeweils zwischen der Säule (26) und einem der Pontons (28A, 28B, 28C) erstrecken, um Aufwärtskräfte (F1, F2, F3) auf die Pontons (28A, 28B, 28C) auszuüben.

10. Stromerzeugungsanordnung (10) nach einem der Ansprüche 1 bis 9, die ferner eine zweite Vielzahl von Verbindungsspanngliedern (24A, 24B, 24C) umfasst, wobei zwei beliebige aufeinanderfolgende Pontons der Vielzahl von Pontons (28A, 28B, 28C) um die Längsachse (Z) durch eines der Verbindungsspannglieder (24A, 24B, 24C) der zweiten Vielzahl miteinander verbunden sind.

11. Stromerzeugungsanordnung (10) nach einem der Ansprüche 1 bis 10, wobei die radialen Achsen (R1, R2, R3) in regelmäßigen Abständen um die Längsachse (Z) angeordnet sind.

12. Verfahren zum Installieren einer Stromerzeugungsanordnung (10) nach einem der Ansprüche 1 bis 11 an einem vordefinierten Ort, mit den folgenden Schritten:
- Die schwimmende Plattform (12), die Verankerungsspannglieder (18A, 18B, 18C) und die Windturbine separat bereitstellen,
- Bewegen der schwimmenden Plattform (12) zu dem vordefinierten Ort, wobei die schwimmende Plattform (12) entweder auf dem Wasserkörper (14) schwimmt und von mindestens einem Schiff geschleppt wird oder an Bord eines schwimmenden Schiffes transportiert wird,
- Verbinden der Verankerungsspannglieder (18A, 18B, 18C) mit dem Meeresboden (20) und mit der schwimmenden Plattform (12) und Spannen der Verankerungsspannglieder (18A, 18B, 18C), und
- Befestigen der Windturbine an der schwimmenden Plattform (12) mit mindestens einem Hub eines Kranschiffs.

## Revendications

1. Ensemble de production d'électricité en mer (10) comprenant une plate-forme flottante (12), une éolienne (16) fixée à la plate-forme flottante (12), et des câbles d'amarrage inclinés (18A, 18B, 18C) reliant la plate-forme flottante (12) à un fond marin (20), la plate-forme flottante (12) comprenant :
- une colonne flottante centrale tubulaire (26) s'étendant le long d'un axe longitudinal (Z) destiné à être vertical, la colonne (26) présentant une partie immergée (30) définissant un premier diamètre externe moyen (D1) qui est le diamètre externe d'un tube cylindrique présentant le même volume que la partie immergée (30) de la colonne (26), et
- une pluralité de pontons tubulaires à flottabilité radiale (28A, 28B, 28C) faisant saillie de la colonne (26) le long d'axes radiaux (R1, R2, R3) espacés autour de l'axe longitudinal (Z), chacun des pontons (28A, 28B, 28C) définissant un second diamètre externe moyen (D2) qui est le diamètre externe d'un tube cylindrique présentant le même volume que le ponton considéré (28A, 28B, 28C), les pontons (28A, 28B, 28C) étant immergés dans une masse d'eau (14), le premier diamètre externe moyen (D1) étant plus grand que le second diamètre externe moyen (D2),
dans lequel la plate-forme flottante (12) est soumise à une force de flottabilité (E), la colonne (26) et les pontons (28A ; 28B, 28C) étant configurés pour fournir au moins 90 % de ladite force de flottabilité (F),
dans lequel chacun des axes radiaux (R1, R2, R3) définit un angle (β) avec un plan transversal (P) perpendiculaire à l'axe longitudinal (Z), l'angle (β) étant compris entre -10° et +10°, et
dans lequel le premier diamètre externe moyen (D1) divisé par le second diamètre externe moyen (D2) est compris entre 1,4 et 2,3.

2. Ensemble de production d'électricité (10) selon la revendication 1, dans lequel la partie immergée (30) de la colonne (26) et les pontons (28A, 28B, 28C) présentent des diamètres extérieurs de section constante le long de l'axe longitudinal (Z) et des axes radiaux (R1, R2, R3) respectivement.

3. Ensemble de production d'électricité (10) selon la revendication 1 ou 2, dans lequel la colonne (26) ne définit qu'un ou deux compartiment(s) interne(s).

4. Ensemble de production d'électricité (10) selon l'une quelconque des revendications 1 à 3, dans lequel chacun des pontons (28A, 28B, 28C) ne définit qu'un seul compartiment interne.

5. Ensemble de production d'électricité (10) selon l'une quelconque des revendications 1 à 4, dans lequel la colonne (26) et l'éolienne présentent un poids (W1), et la colonne (26), considérée seule, est soumise à une force de flottabilité (W2), ladite force de flottabilité (W2) étant comprise entre 85 % et 115 % dudit poids (W1).

6. Ensemble de production d'électricité (10) selon l'une quelconque des revendications 1 à 5, dans lequel la pluralité de pontons (28A, 28B, 28C) est constituée de trois à cinq pontons (28A, 28B, 28C).

7. Ensemble de production d'électricité (10) selon l'une quelconque des revendications 1 à 6, dans lequel la pluralité de pontons (28A, 28B, 28C) est constituée de trois pontons (28A, 28B, 28C).

8. Ensemble de production d'électricité (10) selon l'une quelconque des revendications 1 à 7, dans lequel la plate-forme flottante (12), considérée sans l'éolienne et les câbles d'amarrage (18A, 18B, 18C), est configurée pour flotter sur la masse d'eau (14) avec une ligne d'eau (32) définissant un plan (P1) parallèle au plan transversal (P), le plan (P1) étant plus bas que le plan transversal (P), le plan transversal (P) incluant un centre volumétrique (C) de la pluralité de pontons (28A, 28B, 28C).

9. Ensemble de production d'électricité (10) selon l'une quelconque des revendications 1 à 8, comprenant en outre une première pluralité de tendons de liaison (22A, 22B, 22C) s'étendant entre la colonne (26) et l'un des pontons (28A, 28B, 28C) respectivement pour appliquer des forces ascendantes (F1, F2, F3) sur les pontons (28A, 28B, 28C).

10. Ensemble de production d'électricité (10) selon l'une quelconque des revendications 1 à 9, comprenant en outre une deuxième pluralité de tendons de liaison (24A, 24B, 24C), deux pontons successifs de la pluralité de pontons (28A, 28B, 28C) autour de l'axe longitudinal (Z) étant reliés entre eux par l'un desdits tendons de liaison (24A, 24B, 24C) de la deuxième pluralité.

11. Ensemble de production d'électricité (10) selon l'une quelconque des revendications 1 à 10, dans lequel les axes radiaux (R1, R2, R3) sont régulièrement espacés autour de l'axe longitudinal (Z).

12. Procédé d'installation d'un ensemble de production d'électricité (10) selon l'une quelconque des revendications 1 à 11 dans un lieu prédéfini, comprenant les étapes suivantes :
- fournir la plate-forme flottante (12), les câbles d'amarrage (18A, 18B, 18C) et l'éolienne séparément,
- déplacer la plate-forme flottante (12) vers l'emplacement prédéfini, la plate-forme flottante (12) flottant sur la masse d'eau (14) et étant remorquée par au moins un navire, ou étant transportée à bord d'un navire flottant,
- connecter les câbles d'amarrage (18A, 18B, 18C) au fond marin (20) et à la plate-forme flottante (12), et tendre les câbles d'amarrage (18A, 18B, 18C), et
- fixer l'éolienne à la plate-forme flottante (12) à l'aide d'au moins un navire-grue.
